# EUROPEAN PATENT APPLICATION

(11) **EP 3 070 879 A1**
(43) Date of publication of application: **21.09.2016**
(21) Application number: 14861784.8
(22) Date of filing: 19.06.2014
(51) Int. Cl.: H04L 12/24, H04L 12/26

(54) **OAM PERFORMANCE MONITORING METHOD AND APPARATUS**

(30) Priority: 15.11.2013 CN 201310574755
(71) Applicant: ZTE Corporation, Shenzhen, Guangdong 518057 (CN)
(72) Inventor: WANG, Qilei, Shenzhen Guangdong 518057 (CN); ZHANG, Daowei, Shenzhen Guangdong 518057 (CN); XIONG, Quan, Shenzhen Guangdong 518057 (CN)
(74) Representative: Novagraaf Technologies
(86) International application number: PCT/CN2014/080351
(87) International publication number: WO 2015/070608

(57) **Abstract**

Provided are a method and device for monitoring Operation Administration and Maintenance (OAM) performance. The method includes that: a switch receives OAM performance monitoring rules sent by a controller; the switch receives OAM performance monitoring messages, and filters the OAM performance monitoring messages according to the OAM performance monitoring rules; the switch reports each first OAM performance monitoring message obtained by filtering to the controller for processing, wherein the first OAM performance monitoring message is a message, conforming to the OAM performance monitoring rules, in the OAM performance monitoring messages. The technical solution can reduce controller performance consumption and excessive occupation of control channel bandwidth caused by reporting performance monitoring delay measurement results and packet loss measurement results.

## Description

### Technical Field

The present disclosure relates to the field of communications, and in particular to a method and device for monitoring Operation Administration and Maintenance (OAM) performance.

### Background

The existing network exposes more and more disadvantages and people have high requirements for the network performance, so researchers have to add a lot of complicated functions into the architecture of a router, such as the Open Shortest Path First (OSPF), the Border Gateway Protocol (BGP), the multicast, the differentiated service, the traffic engineering, the Network Address Translation (NAT), the firewall, and the Multi-Protocol Label Switching (MPLS). As a consequence, the router and other switching devices are more and more bloated and the room for improving the performance is smaller and smaller.

However, in contrast to the plight of the network field, the computer field has a rapid development. By carefully reviewing the development of the computer field, it is not difficult to find that the key for the rapid development is that a simple and available hardware base (x86 instruction set) is found in the computer field. Because of such a public hardware base, on the software side, both the application program and the operating system have made a great development. Now many people advocating redesigning the computer network architecture think that: the network can replicate the success of the computer field to solve all problems of the existing network. As guided by this idea, the future network is bound to become a network like this: the underlying data paths (a switch and a router) are "dumb, simple and smallest", and an opening public Application Programming Interface (API) about a flow table, and a controller is adopted for controlling the whole network. By virtue of this, the researchers in the future can freely call the underlying API on the controller to program, thereby achieving the innovation of network.

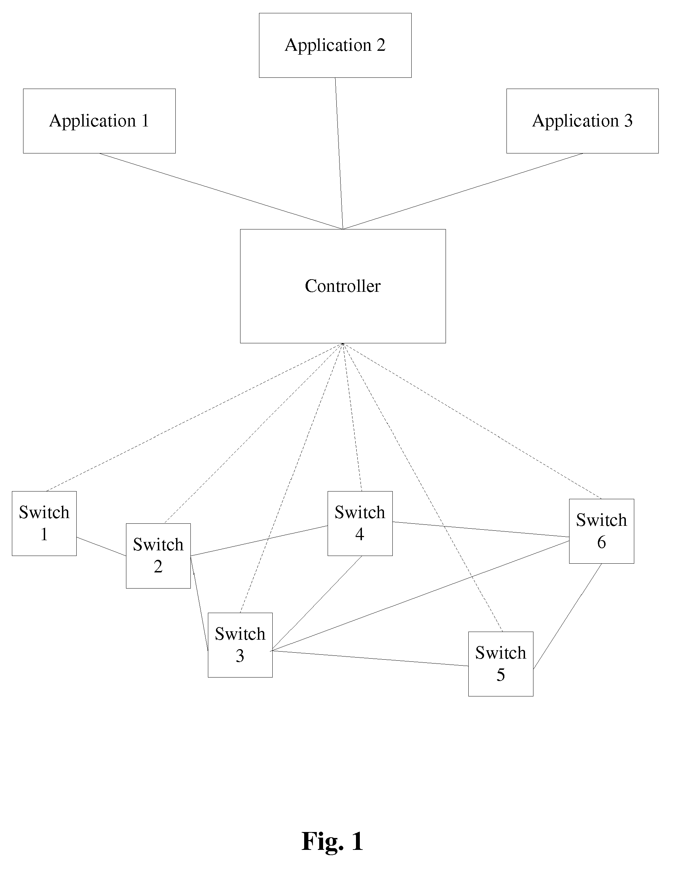

Based on the above idea, a Software Defined Network (SDN) appears, and it is a new innovative network architecture originally proposed by the research group clean slate of Stanford University. Fig. 1 is a structure diagram of an SDN framework according to the related art. As shown in Fig. 1, an SDN network usually includes three framework levels: a physical network, an SDN application and an SDN controller.

The physical network is located at the lowest level, and includes all physical devices in the network composing the whole IT infrastructure. The visible part of the SDN design is applications for providing services, such as switch/network virtualization, firewall, and data stream balancer. The SDN controller likes a middleware in the whole architecture; and the controller should integrate all the physical and virtual devices in the network, receive a request from the application, and send, through the OpenFlow protocol, the request to the physical device to establish a service path.

At present, the OpenFlow protocol serves as a core protocol for interaction between the controller and the physical network device; by separating a network device control plane from a data plane, a flexible control of network traffic is implemented, and a good platform is provided for the innovation of application.

As a main part of transport connection, the OAM performance monitoring can provide functions of monitoring the network quality, inspecting and locating a fault, and assisting the network to recover quickly. The OAM performance monitoring is a basic support tool for normal and stable running of the network and quick recovery of the network after the fault, and is an important guarantee for providing high-quality services for users. The OAM can be divided into static on-demand OAM and dynamic active OAM according to the function. Similarly, the OAM performance monitoring is divided into static on-demand OAM performance monitoring and dynamic active performance monitoring. The on-demand performance monitoring is conducted pointedly, and is under the control of management personal; when the on-demand performance monitoring is conducted, network services and other functions of the device are not influenced obviously. While the active performance monitoring will consume the device performance, and influences the network services; the most appropriate function can be enabled according to the need.

In the actual network deployment, the dynamic on-demand performance monitoring configuration cannot meet the requirement for convenience of all scenarios. For example, in a scenario needing to measure a large number of Label Switching Paths (LSP), operators want to conduct dynamic LSP fault detection without human intervention; in a scenario where the LSP needs to dynamically conduct function detection from an inlet Label Switching Router (LSR) to an outlet LSR, or in a scenario where the controller needs to build a virtual network topology meeting a delay condition for the application to serve, the dynamic and continuous performance monitoring measurement is usually needed for meeting the requirements of the services.

The existing solution in the SDN scenario is that: after receiving OAM performance monitoring messages of measured delay and packet loss, node switches at two ends of the path will report all these OAM performance monitoring messages to the controller, and then the controller parses these OAM performance monitoring messages, and discards or further processes the OAM performance monitoring message according to the content of the message. In some networks containing more nodes, processing a large number of OAM performance monitoring messages will cause the excessive occupation of controller resources and the occupation of control channel bandwidth resources. So, if the switch can perform some preliminary processing on these reported OAM messages of the delay and packet loss, the load of the controller can be effectively reduced. In addition, in some network scenarios having relatively high requirements for the delay and packet loss, for example, a stock network, the application has a stringent requirement for the delay and packet loss, and the controller can build, according to the delay and packet loss state in the physical network, the virtual network topology for the application to serve, when a fault occurs, switching can be performed directly according to the virtual network topology to reduce losses. In these network scenarios, the dynamic and continuous performance monitoring measurement is usually needed for meeting the requirements of the services.

Aiming at the problems in the related art of controller performance consumption and excessive occupation of control channel bandwidth caused by reporting performance monitoring delay measurement results and packet loss measurement results by the switch, an effective solution has not been presented.

### Summary

The embodiments of the present disclosure provide a method and device for monitoring OAM performance, for at least solving the problems of controller performance consumption and excessive occupation of control channel bandwidth caused by reporting performance monitoring delay measurement results and packet loss measurement results by a switch.

According to an aspect of the embodiments of the present disclosure, a method for monitoring OAM performance is provided, which includes that: a switch receives OAM performance monitoring rules sent by a controller; the switch receives OAM performance monitoring messages, and filters the OAM performance monitoring messages according to the OAM performance monitoring rules; and the switch reports each first OAM performance monitoring message obtained by filtering to the controller for processing, wherein the first OAM performance monitoring message is a message, conforming to the OAM performance monitoring rules, in the OAM performance monitoring messages.

In an example embodiment, the switch receiving the OAM performance monitoring rules sent by the controller includes that: the switch receives an OpenFlow message sent by the controller, wherein the OpenFlow message includes: the OAM performance monitoring rules and flow Identifier (ID) information, and the flow ID information is used for indicating the switch to associate OAM performance monitoring messages with the OAM performance monitoring rules.

In an example embodiment, the switch filtering the OAM performance monitoring messages according to the OAM performance monitoring rules includes that: the switch associates the OAM performance monitoring messages with the OAM performance monitoring rules according to the flow ID information; the switch parses each OAM performance monitoring message according to the OAM performance monitoring rules, and when the OAM performance monitoring message conforms to the OAM performance monitoring rules, determines the OAM performance monitoring message as the first OAM performance monitoring message, or else, determines the OAM performance monitoring message as a second OAM performance monitoring message, wherein the second OAM performance monitoring message is a message, not conforming to the OAM performance monitoring rules, in the OAM performance monitoring messages.

In an example embodiment, after the switch determines the OAM performance monitoring message as the second OAM performance monitoring message, the method further includes that: the switch discards the second OAM performance monitoring message.

In an example embodiment, the OAM performance monitoring rules are preset by the controller.

In an example embodiment, monitoring contents of the OAM performance monitoring rules include: delay measurement results and packet loss measurement results.

In an example embodiment, transport plane networks of the OAM performance monitoring rules include: the Ethernet network and the MPLS network.

According to another aspect of the embodiments of the present disclosure, a device for monitoring OAM performance is provided, which is in the switch and includes: a receiving component, which is configured to receive the OAM performance monitoring rules sent by the controller; a processing component, which is configured to receive the OAM performance monitoring messages, and filter the OAM performance monitoring messages according to the OAM performance monitoring rules; and a reporting component, which is configured to report the first OAM performance monitoring message obtained by filtering to the controller for processing, wherein the first OAM performance monitoring message is a message, conforming to the OAM performance monitoring rules, in the OAM performance monitoring messages.

In an example embodiment, the receiving component includes: a receiving element, which is configured to receive the OpenFlow message sent by the controller, wherein the OpenFlow message includes: the OAM performance monitoring rules and the flow ID information, and the flow ID information is used for indicating the switch to associate OAM performance monitoring messages with the OAM performance monitoring rules.

In an example embodiment, the processing component includes: an associating element, which is configured to associate OAM performance monitoring messages with the OAM performance monitoring rules according to the flow ID information; and a parsing element, which is configured to parse each OAM performance monitoring message according to the OAM performance monitoring rules, and when the OAM performance monitoring message conforms to the OAM performance monitoring rules, determine the OAM performance monitoring message as the first OAM performance monitoring message, or else, determine the OAM performance monitoring message as the second OAM performance monitoring message, wherein the second OAM performance monitoring message is a message, not conforming to the OAM performance monitoring rules, in the OAM performance monitoring messages.

By using the method that the switch filters the received OAM performance monitoring messages according to the OAM performance monitoring rules sent by the controller, and reports each message conforming to the OAM performance monitoring rules to the controller for further processing, the embodiments of the present disclosure solve the problems in the related art of controller performance consumption and excessive occupation of control channel bandwidth caused by reporting the performance monitoring delay measurement results and the packet loss measurement results by the switch, and achieve the effect of reducing the controller performance consumption and excessive occupation of control channel bandwidth caused by reporting the performance monitoring delay measurement results and the packet loss measurement results.

### Brief Description of the Drawings

The accompanying drawings described here are used for providing a deeper understanding of the present disclosure, and constitute a part of the application; schematic embodiments of the present disclosure and description thereof are used for illustrating the present disclosure and not intended to form an improper limit to the present disclosure. In the accompanying drawings:
Fig. 1 is a structure diagram of an SDN framework according to the related art;
Fig. 2 is a flowchart of a method for monitoring OAM performance according to an embodiment of the present disclosure;
Fig. 3 is a structure diagram of a device for monitoring OAM performance according to an embodiment of the present disclosure;
Fig. 4 is a structure diagram of a device for monitoring OAM performance according to an example embodiment of the present disclosure;
Fig. 5 is a structure diagram of a controller according to an example embodiment of the present disclosure;
Fig. 6 is a structure diagram of a switch according to an example embodiment of the present disclosure;
Fig. 7 (Fig. 7a, Fig. 7b and Fig. 7c) is a structure diagram of a message according to an example embodiment of the present disclosure; and
Fig. 8 is a flowchart of implementing OAM performance monitoring according to an example embodiment of the present disclosure.

### Detailed Description of the Embodiments

The present disclosure is elaborated below with reference to the accompanying drawings and embodiments. Note that, embodiments and features of the embodiments in the application can be combined with each other on condition of not conflicting.

The embodiments of the present disclosure mainly relate to a solution for implementing OAM performance monitoring which can be applied to an SDN network framework scenario. In the embodiments of the present disclosure, by sending some OAM performance monitoring rules to an OpenFlow switch, a controller can enable the OpenFlow switch to preliminarily filter delay measurement results and packet loss measurement results, and report the results meeting filtering conditions to the controller for further analysis. The technical solution provided by the embodiments of the present disclosure can reduce the controller performance consumption and excessive occupation of control channel bandwidth caused by reporting the performance monitoring delay measurement results and the packet loss measurement results.

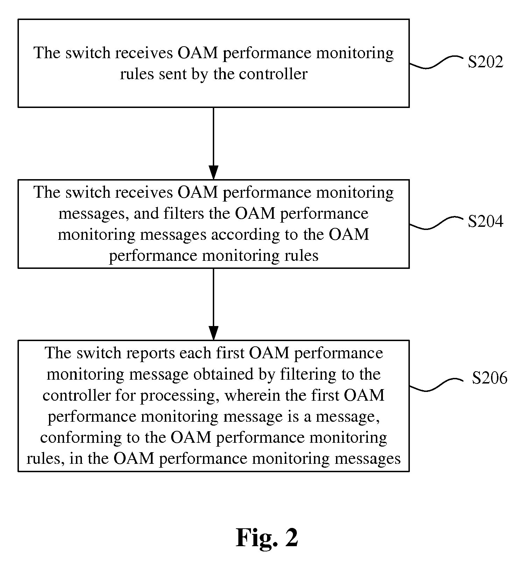

The present disclosure provides a method for monitoring OAM performance. Fig. 2 is a flowchart of a method for monitoring OAM performance according to an embodiment of the present disclosure. As shown in Fig. 2, the method mainly includes the following steps (from Step S202 to Step S206):
Step S202: the switch receives OAM performance monitoring rules sent by the controller;
Step S204: the switch receives OAM performance monitoring messages, and filters the OAM performance monitoring messages according to the OAM performance monitoring rules; and
Step S206: the switch reports each first OAM performance monitoring message obtained by filtering to the controller for processing, wherein the first OAM performance monitoring message is a message, conforming to the OAM performance monitoring rules, in the OAM performance monitoring messages.

Through the above steps, the switch can filter the received OAM performance monitoring messages according to the OAM performance monitoring rules sent by the controller, and report the message conforming the OAM performance monitoring rules to the controller for further processing, thereby reducing the controller performance consumption and excessive occupation of control channel bandwidth caused by reporting the performance monitoring delay measurement results and the packet loss measurement results.

In the present embodiment, Step S202 may be implemented in the following way: the switch receives an OpenFlow message sent by the controller, wherein the OpenFlow message may include: the OAM performance monitoring rules and flow ID information, and the flow ID information is used for indicating the switch to associate OAM performance monitoring messages with the OAM performance monitoring rules.

In Step S204 of the present embodiment, in the process that the switch filters the OAM performance monitoring messages according to the OAM performance monitoring rules, the switch may associate OAM performance monitoring messages with the OAM performance monitoring rules according to the flow ID information, and then parse each OAM performance monitoring message according to the OAM performance monitoring rules; when the OAM performance monitoring message conforms to the OAM performance monitoring rules, the switch determines the OAM performance monitoring message as the first OAM performance monitoring message, or else, determines the OAM performance monitoring message as a second OAM performance monitoring message, wherein the second OAM performance monitoring message is a message, not conforming to the OAM performance monitoring rules, in the OAM performance monitoring messages.

In an example embodiment, in an example implementation of the present embodiment, after the switch determines the OAM performance monitoring message as the second OAM performance monitoring message, the switch may discard the second OAM performance monitoring message.

In the present embodiment, the OAM performance monitoring rules may be preset by the controller. Monitoring contents of the OAM performance monitoring rules may include: the delay measurement results and the packet loss measurement results. Transport plane networks of the OAM performance monitoring rules may include: the Ethernet network and the MPLS network. Certainly, in practical applications, the monitoring contents can also be extended instead of being limited to this.

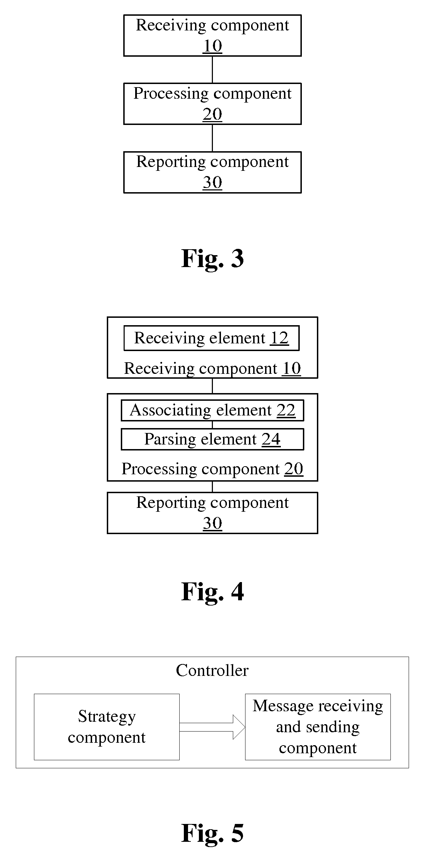

The present disclosure provides a device for monitoring OAM performance, which is in the switch and is used for implementing the Method for monitoring OAM performance. Fig. 3 is a structure diagram of a device for monitoring OAM performance according to an embodiment of the present disclosure; as shown in Fig. 3, the device mainly includes: a receiving component 10, a processing component 20 and a reporting component 30.

In an example embodiment, the receiving component 10 is configured to receive the OAM performance monitoring rules sent by the controller; the processing component 20 is configured to receive the OAM performance monitoring messages, and filter the OAM performance monitoring messages according to the OAM performance monitoring rules; and the reporting component 30 is configured to report the first OAM performance monitoring message obtained by filtering to the controller for processing, wherein the first OAM performance monitoring message is a message, conforming to the OAM performance monitoring rules, in the OAM performance monitoring messages.

Fig. 4 is a structure diagram of a device for monitoring OAM performance according to an example embodiment of the present disclosure; as shown in Fig. 4, in the device provided by the example embodiment, the receiving component 10 may include: a receiving element 12, which is configured to receive the OpenFlow message sent by the controller, wherein the OpenFlow message includes: the OAM performance monitoring rules and the flow ID information, and the flow ID information is used for indicating the switch to associate OAM performance monitoring messages with the OAM performance monitoring rules.

In the device provided by the example embodiment, the processing component 20 may include: an associating element 22, which is configured to associate OAM performance monitoring messages with the OAM performance monitoring rules according to the flow ID information; and a parsing element 24, which is configured to parse each OAM performance monitoring message according to the OAM performance monitoring rules, and when the OAM performance monitoring message conforms to the OAM performance monitoring rules, determine the OAM performance monitoring message as the first OAM performance monitoring message, or else, determine the OAM performance monitoring message as the second OAM performance monitoring message, wherein the second OAM performance monitoring message is a message, not conforming to the OAM performance monitoring rules, in the OAM performance monitoring messages.

By using the Method and device for monitoring OAM performance provided by the above embodiments, the controller performance consumption and excessive occupation of control channel bandwidth caused by reporting the performance monitoring delay measurement results and the packet loss measurement results can be reduced.

The Method and device for monitoring OAM performance provided by the above embodiments are further described and illustrated below in combination with Fig. 5 to Fig. 8 and the example embodiments.

Before describing the implementation process of the example embodiment, the idea of the present embodiment is introduced below briefly: in the related art, in an active OAM performance monitoring scenario, the OpenFlow switch needs to report all the delay measurement results and packet loss measurement results to the controller, and then the controller chooses strategies. But in practice, the controller does not need to process all the OAM messages, but just needs to process some OAM messages meeting certain conditions, and processing a large number of OAM messages will influence the performance of the controller and occupy the control channel bandwidth. For solving the adverse effects of the related art, the solution provided by the example embodiment is that the controller sends some OAM performance monitoring rules to the OpenFlow switch to enable the OpenFlow switch to preliminarily filter the delay measurement results and the packet loss measurement results, and report the results meeting the filtering conditions to the controller for further analysis. In this way, the controller performance consumption and excessive occupation of control channel bandwidth caused by reporting the performance monitoring delay measurement results and the packet loss measurement results can be reduced.

It can be seen from the description about the background technology, according to functions, the OAM performance monitoring may be divided into static on-demand OAM performance monitoring and dynamic active OAM performance monitoring. The Method for monitoring OAM performance provided by the example embodiment can extend the OpenFlow; the method may be mainly applied to sending rules in the active OAM performance monitoring scenario, and may also be applied to the on-demand OAM performance monitoring. In the present effective embodiment, the specific transport plane network may be either the Ethernet network or the MPLS network; the performance monitoring may include the measuring of delay and packet loss.

Fig. 5 is a structure diagram of a controller according to an example embodiment of the present disclosure; as shown in Fig. 5, the controller includes a strategy component and a message receiving and sending component.

The strategy component is configured to set the rules to be sent, for example, aiming at paths whose delays exceed 100ms, a path restoration operation is performed; or the controller collects paths whose delays are in a certain range, and is configured to construct a virtual network topology for an application to serve. At this point, the strategy component of the controller needs to set similar strategies and transmit the strategies to the message receiving and sending component, then the message receiving and sending component sends the rules.

The message receiving and sending component is configured to construct an OpenFlow message packet, establish a channel with the switch, and send the strategy rules of the controller to the switch; the message receiving and sending component also needs to send the flow ID information while sending the rules, so that the switch can associate the performance monitoring message with the specific processing rule; at the same time, the message receiving and sending component is configured to receive the message from the switch, and transmit the results reported by the switch to the strategy component for further processing.

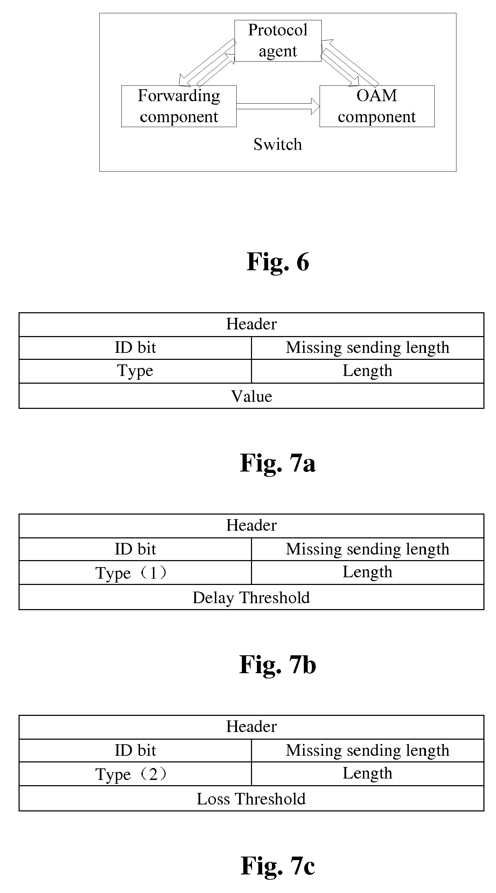

Fig. 6 is a structure diagram of a switch according to an example embodiment of the present disclosure; as shown in Fig. 6, the switch includes: a protocol agent, a forwarding component and an OAM component.

The protocol agent is configured to receive the OpenFlow message from the controller, further split the message, and transmit the OAM performance monitoring rules to the OAM component; the protocol agent also needs to transmit the flow ID information while transmitting the OAM performance monitoring rules, so that the OAM component can associate the performance monitoring message with the specific OAM processing rule; forwarding-related flow table information contained in the message can be sent to the forwarding component; the protocol agent can receive the message from the forwarding component, and forward the message to the controller for further processing; the protocol agent may also receive some filtered performance monitoring messages from the OAM component, and report these messages to the controller for further processing.

The forwarding component contains the flow table information, and is mainly configured to forward data packets, receive flow table configuration information from the protocol agent, and add, modify and delete flow table entries; the forwarding component may also forward the data packets to a certain output port to a next-hop switch, or forward the OAM performance monitoring message to an internal component like the OAM component for further processing, or report the message to the controller for further processing in the absence of flow table matches.

The OAM component is configured to receive the messages transmitted from the forwarding component, associate the messages with the specific OAM rules for processing according to the ID in the messages, and after filtering the parsed messages, report these meeting the condition to the controller and discard these not meeting the condition; if it is needed to report the filtered OAM performance monitoring messages to the controller, the OAM component transmit these performance monitoring messages to the protocol agent, and then the protocol agent reports these messages to the controller; the OAM component may receive the rules transmitted from the protocol agent, and apply the rules sent by the controller to the switch.

Fig. 7 is a structure diagram of a message according to an example embodiment of the present disclosure; Fig. 7 is a structure of the message provided in the present disclosure, that is, a delay threshold, a packet loss threshold and other information are carried in a switch configuration message, and the switch configuration message is sent to the switch by the controller. Note that, Fig. 7 includes three subordinate figures, wherein,
the first subordinate figure (a) describes a general format, that is, the delay threshold, the packet loss threshold or others are differentiated by carrying a sub-TLV (type/length/value);
the second subordinate figure (b) is a structure of the message carrying the delay threshold, which uses the type 1 to identify that the delay threshold is carried, and then identify that it is needed to report to the controller when a path delay condition exceeds this threshold; if the delay threshold is 0, then it is identified to stop use of such rules; the blacken part in the figure is the extended part of the patent;
the third subordinate figure (c) is a structure of the message carrying the packet loss threshold, which uses the type 2 to identify that the packet loss threshold is carried, and then identify that it is needed to report to the controller when the measurement related to path packet loss exceeds this threshold; if the delay threshold is 0, then it is identified to stop use of such rules; the blacken part in the figure is the extended part of the patent.

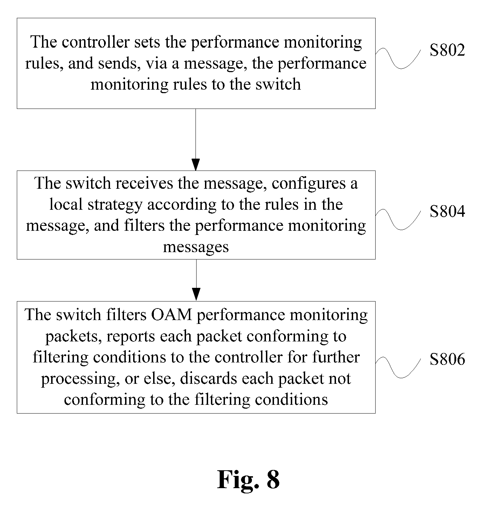

Based on the structure of the controller shown in Fig. 5, the structure of the switch shown in Fig. 6 and the structure of the message shown in Fig. 7, the flow of implementing OAM performance monitoring is illustrated below in combination with Fig. 8.

Fig. 8 is a flowchart of implementing OAM performance monitoring according to an example embodiment of the present disclosure; as shown in Fig. 8, the implementation process includes the following steps.

Step S802: the strategy component of the controller sets the OAM related rules according to configuration or its own strategy.

In practical applications, the controller may transmit these strategy rules to the message receiving and sending component to send; the message receiving and sending component encapsulates the OpenFlow message according to the rules transmitted from the strategy component, and sends the encapsulated OpenFlow message to the related OpenFlow switch; except containing information related to the strategy rule, the OpenFlow message also contains ID information of the flow to use the strategy rule, sending interval information of message and other configuration information.

Step S804: the switch receives the message, configures a local strategy according to the rule in the message, and filters the performance monitoring message.

In the example embodiment, after receiving the message from the controller, the protocol agent of the OpenFlow switch splits the message, and then configures the forwarding component to forward a packet related to OAM performance monitoring to the local OAM component for further processing; at the same time, flow related rules and configuration parameters are configured to the OAM component; the OAM component is configured to control and process the sending and receiving of the OAM performance monitoring message; the OAM performance monitoring message may be generated by the OpenFlow switch, or the controller sends the OAM performance monitoring message to the OpenFlow switch through a packet-out message, and carries a command to guide the OpenFlow switch to send the OAM performance monitoring message.

Step S806: the switch filters OAM performance monitoring packets, and reports each packet meeting the filtering conditions to the controller for further processing, or else, discards each packet not meeting the filtering conditions.

In the example embodiment, the key is filtering the OAM performance monitoring messages. After the OpenFlow switch receives the OAM performance monitoring messages, the forwarding component forwards these messages to the OAM component, then the OAM component parses the messages; if the messages conform to the rules sent by the controller, the OAM component reports the messages to the controller for further processing. For example, when an end-to-end delay of a certain path exceeds a certain specified threshold, the OAM performance monitoring message is reported to the controller; after receiving the message, the controller selects, according to the strategy, the next action, for example, rerouting the path, and selecting a path whose delay/packet loss meets the condition.

Through the example embodiment, the controller performance consumption and excessive occupation of control channel bandwidth caused by reporting the performance monitoring delay measurement results and the packet loss measurement results can be reduced.

Note that, the above components can be implemented by hardware; for example, a processor includes the above components, or the above components are in a processor.

In another embodiment, a piece of software is also provided, which is used for implementing the technical solutions described in the above embodiments and example implementations.

In another embodiment, a storage medium is also provided, which stores the above software, and includes, but is not limited to, a compact disc, a floppy disc, a hard disc, an erasable memory, and so on.

It can be seen from the above description that the present disclosure achieves the following technical effects: the switch can filter the received OAM performance monitoring messages according to the OAM performance monitoring rules sent by the controller, and report the message conforming the OAM performance monitoring rules to the controller for further processing, thereby solving the problems in the related art of the controller performance consumption and excessive occupation of control channel bandwidth caused by reporting the performance monitoring delay measurement results and the packet loss measurement results by the switch, and reducing the controller performance consumption and excessive occupation of control channel bandwidth caused by reporting the performance monitoring delay measurement results and the packet loss measurement results.

Obviously, those skilled in the art should appreciate that the above components and steps of the present disclosure may be implemented by a general-purpose computing device, and they may be centralized in a single computing device or distributed on a network composed of multiple computing devices; optionally, they may be implemented by a program code which is capable of being executed by the computing device, so that they can be stored in a storage device and executed by the computing device; and in some situations, the presented or described steps can be executed in an order different from that described here; or they are made into integrated circuit components, respectively; or multiple components and steps of them are made into a single integrated circuit component to realize. In this way, the present disclosure is not limited to any particular combination of hardware and software.

The above is only the example embodiments of the present disclosure and not intended to limit the present disclosure; for those skilled in the art, the present disclosure may have various modifications and changes. Any modifications, equivalent replacements, improvements and the like within the spirit and principle of the present disclosure should fall within the scope of the claims of the present disclosure.

### Industrial Applicability

As described above, through the embodiments and example implementations, the present disclosure can achieve the effects of solving the problems in the related art of the controller performance consumption and excessive occupation of control channel bandwidth caused by reporting the performance monitoring delay measurement results and the packet loss measurement results by the switch, and reducing the controller performance consumption and excessive occupation of control channel bandwidth caused by reporting the performance monitoring delay measurement results and the packet loss measurement results.

## Claims

1. A method for monitoring Operation Administration and Maintenance, OAM, performance, comprising:
receiving, by a switch, OAM performance monitoring rules sent by a controller;
receiving, by the switch, OAM performance monitoring messages, and filtering the OAM performance monitoring messages according to the OAM performance monitoring rules; and
reporting, by the switch, each first OAM performance monitoring message obtained by filtering to the controller for processing, wherein the first OAM performance monitoring message is a message, conforming to the OAM performance monitoring rules, in the OAM performance monitoring messages.

2. The method as claimed in claim 1, wherein receiving, by the switch, the OAM performance monitoring rules sent by the controller comprises:
receiving, by the switch, an OpenFlow message sent by the controller, wherein the OpenFlow message comprises: the OAM performance monitoring rules and flow Identifier, ID, information, and the flow ID information is used for indicating the switch to associate OAM performance monitoring messages with the OAM performance monitoring rules.

3. The method as claimed in claim 2, wherein filtering, by the switch, the OAM performance monitoring messages according to the OAM performance monitoring rules comprises:
associating, by the switch, the OAM performance monitoring messages with the OAM performance monitoring rules according to the flow ID information;
parsing, by the switch, each OAM performance monitoring message according to the OAM performance monitoring rules, and when the OAM performance monitoring message conforms to the OAM performance monitoring rules, determining the OAM performance monitoring message as the first OAM performance monitoring message, or else, determining the OAM performance monitoring message as a second OAM performance monitoring message, wherein the second OAM performance monitoring message is a message, not conforming to the OAM performance monitoring rules, in the OAM performance monitoring messages.

4. The method as claimed in claim 3, wherein after the switch determines the OAM performance monitoring message as the second OAM performance monitoring message, further comprising:
discarding, by the switch, the second OAM performance monitoring message.

5. The method as claimed in any one of claims 1 to 4, wherein the OAM performance monitoring rules are preset by the controller.

6. The method as claimed in claim 5, wherein monitoring contents of the OAM performance monitoring rules comprise: delay measurement results and packet loss measurement results.

7. The method as claimed in claim 5, wherein transport plane networks of the OAM performance monitoring rules comprise: an Ethernet network and a Multi-Protocol Label Switching, MPLS, network.

8. A device for monitoring Operation Administration and Maintenance, OAM, performance which is located in a switch, comprising:
a receiving component, which is configured to receive OAM performance monitoring rules sent by a controller;
a processing component, which is configured to receive OAM performance monitoring messages, and filter the OAM performance monitoring messages according to the OAM performance monitoring rules; and
a reporting component, which is configured to report each first OAM performance monitoring message obtained by filtering to the controller for processing, wherein the first OAM performance monitoring message is a message, conforming to the OAM performance monitoring rules, in the OAM performance monitoring messages.

9. The device as claimed in claim 8, wherein the receiving component comprises:
a receiving element, which is configured to receive an OpenFlow message sent by the controller, wherein the OpenFlow message comprises: the OAM performance monitoring rules and flow Identifier, ID, information, and the flow ID information is used for indicating the switch to associate OAM performance monitoring messages with the OAM performance monitoring rules.

10. The device as claimed in claim 9, wherein the processing component comprises:
an associating element, which is configured to associate OAM performance monitoring messages with the OAM performance monitoring rules according to the flow ID information; and
a parsing element, which is configured to parse each OAM performance monitoring message according to the OAM performance monitoring rules, and when the OAM performance monitoring message conforms to the OAM performance monitoring rules, determine the OAM performance monitoring message as the first OAM performance monitoring message, or else, determine the OAM performance monitoring message as a second OAM performance monitoring message, wherein the second OAM performance monitoring message is a message, not conforming to the OAM performance monitoring rules, in the OAM performance monitoring messages.
